(19) Europäisches Patentamt
European Patent Office
Office européen des brevets

(11) **EP 4 277 350 A1**

(12) **EUROPEAN PATENT APPLICATION**

(43) Date of publication:
**15.11.2023 Bulletin 2023/46**

(21) Application number: **23172972.4**

(22) Date of filing: **11.05.2023**

(51) International Patent Classification (IPC):
**H04W 36/00** (2009.01)     **H04W 84/06** (2009.01)

(52) Cooperative Patent Classification (CPC):
**H04W 36/00837;** H04W 36/0058; H04W 36/083;
H04W 84/06

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **13.05.2022 KR 20220059171
29.08.2022 KR 20220108656**

(71) Applicant: **Samsung Electronics Co., Ltd.
Suwon-si, Gyeonggi-do 16677 (KR)**

(72) Inventors:
• **LEE, Sunyoung
16677 Suwon-si (KR)**
• **KIM, Jinho
16677 Suwon-si (KR)**

(74) Representative: **Marks & Clerk LLP
15 Fetter Lane
London EC4A 1BW (GB)**

(54) **DOPPLER MEASUREMENT-BASED HANDOVER**

(57)     An operating method of user equipment (LTE) includes transmitting a user capability including receive performance information of the LTE to a serving cell, receiving a Doppler parameter generated based on the user capability and radio resource control (RRC) configuration information, from the serving cell, measuring reference signal received power (RSRP) of a reference signal and a Doppler shift with reference to the RRC configuration information, and reporting, to the serving cell, an RSRP_Doppler value, which is a signal metric calculated based on the measured RSRP, the measured Doppler shift, and the Doppler parameter.

FIG. 5

**Description**

Technical Field

This disclosure relates generally to handover in wireless communications.

Discussion of Related Art

To meet the increasing demand for high speed wireless data traffic, fifth generation (5G) communication technology has recently been developed and commercialized. To achieve a high data rate, a 5G communication system may be implemented to include a millimeter wave (mmWave) band (e.g., a 60 gigahertz (60 GHz) band). To alleviate the path loss of radio waves in a mmWave band and increase the propagation distance of radio waves, beamforming, massive multi input multi output (MIMO), full dimensional MIMO (FD-MIMO), array antennas, analog beam-forming, large scale antenna technology, etc. have been implemented or proposed for 5G communication systems.

In addition, to improve the wireless network, technologies such as an evolved small cell, an advanced small cell, a cloud radio access network (cloud RAN), an ultra-dense network, device to device (D2D) communication, a wireless backhaul, a moving network, cooperative communication, coordinated multi-points (CoMP), interference cancellation, etc. have been implemented or proposed for 5G.

Further, Hybrid Frequency Shift Keying and Quadrature Amplitude Modulation (FQAM) and Sliding Window Superposition Coding (SWSC), which are advanced coding modulation (ACM) schemes, Filter Bank Multicarrier (FBMC) and Sparse Code Multiple Access (SCMA) which are advanced access technologies, etc. have been applied to or proposed for 5G.

In a 5G wireless communication system, a user equipment (LTE) measures reference signal received power (RSRP) of a serving cell and/or neighbor cell (a cell located near the LTE and to which the UE is not connected) and transmits a measurement result to a serving cell (a cell to which the LTE is connected) through a measurement report to perform a handover. In addition, the serving cell transmits the received measurement report to a target cell of the potential handover (e.g., the neighbor cell), or to a core network, and the target cell or core network may determine whether to approve the handover.

However, when the serving cell moves at a high speed like a low-earth orbit (LEO) cell, the receive performance of the LTE may deteriorate during the course of handover.

SUMMARY

Embodiments of the inventive concept provide: a user equipment (LTE) that measures reference signal received power (RSRP) and Doppler shift of a reference signal, and reports an "RSRP Doppler" value which is calculated based on a measurement result to a serving cell; a communication system including the UE; and an operating method of the LTE and the communication system.

According to an aspect of the inventive concept, there is provided an operating method of user equipment (LTE), where the method includes transmitting a user capability including receive performance information of the UE to a serving cell, receiving a Doppler parameter generated based on the user capability and radio resource control (RRC) configuration information, from the serving cell, and measuring reference signal received power (RSRP) of a reference signal and a Doppler shift with reference to the RRC configuration information. The method further involves reporting, to the serving cell, an RSRP_Doppler value, which is a signal metric calculated based on the measured RSRP, the measured Doppler shift, and the Doppler parameter.

According to another aspect of the inventive concept, there is provided user equipment (LTE) including a memory storing receive performance information of the UE, and a processor configured to transmit a user capability including receive performance information of the LTE to a serving cell, receive a Doppler parameter generated based on the user capability and RRC configuration information, from the serving cell, measure RSRP of a reference signal and a Doppler shift with reference to the RRC configuration information, and report a RSRP_Doppler value calculated based on a result of the measurement and the Doppler parameter to the serving cell.

According to another aspect of the inventive concept, there is provided a wireless communication system including a serving cell configured to transmit a Doppler parameter generated based on a user capability and RRC configuration information to a UE, and the UE configured to measure RSRP of a reference signal and a Doppler shift with reference to the RRC configuration information, and report an RSRP_Doppler value calculated on a result of the measurement and the Doppler parameter.

At least some of the above and other features of the invention are set out in the claims.

## BRIEF DESCRIPTION OF THE DRAWINGS

Embodiments of the inventive concept will be more clearly understood from the following detailed description taken in conjunction with the accompanying drawings in which:

FIG. 1 is a diagram illustrating an environment of a terrestrial cell and a low-earth orbit (LEO) cell according to an embodiment;
FIG. 2 is a diagram illustrating an environment of a geostationary earth orbit (GEO) cell and a LEO cell according to an embodiment;
FIG. 3 is a diagram illustrating LEO cell environments of different altitudes according to an embodiment;
FIG. 4 is a block diagram illustrating user equipment (LTE) according to an embodiment;
FIG. 5 is a signal exchange diagram between LTE and a serving cell according to an embodiment;
FIG. 6 is a flowchart illustrating reference signal received power (RSRP) and Doppler shift measurement operation according to an embodiment;
FIG. 7 is a flowchart illustrating an RSRP_Doppler reporting operation according to an embodiment;
FIGS. 8A and 8B are tables illustrating Delta Doppler according to Doppler shift; and
FIG. 9 is a block diagram illustrating a wireless communication system according to an embodiment.

## DETAILED DESCRIPTION OF EMBODIMENTS

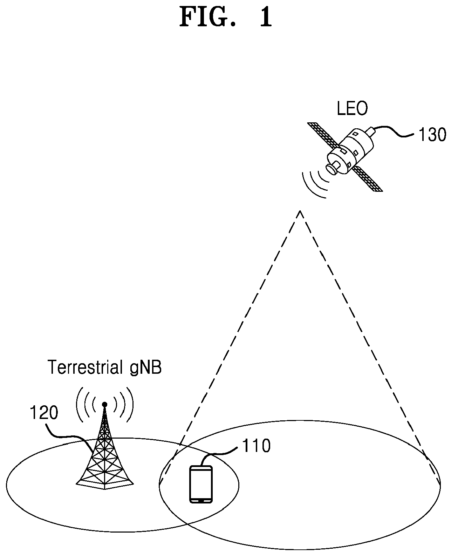

Hereinafter, embodiments of the inventive concept will be described in detail with reference to the accompanying drawings. FIG. 1 is a diagram illustrating an environment of a terrestrial cell 120 and a low-earth orbit (LEO) cell 130 according to an embodiment. User equipment (UE) 110 may access a network of a wireless communication system by transmitting and receiving signals to/from the terrestrial cell 120 or the LEO cell 130. For example, the wireless communication system may also be referred to as radio access technology (RAT). This may be for example, a wireless communication system using a cellular network, such as a 5th generation (5G) wireless communication system, a long term evolution (LTE) communication system, an LTE-advanced communication system, a code division multiple access (CDMA) communication system, a global system for mobile communications (GSM) communication system, etc., a wireless local area network (WLAN) communication system or any other wireless communication system.

Hereinafter, the wireless communication system will be described as a 5G communication system, but some embodiments are not limited thereto, and it is apparent that some embodiments may also be applied to a next-generation wireless communication system.

A wireless communication network used in the wireless communication system may support communication of a plurality of wireless communication devices including the UE 110 by sharing available network resources.

For example, in the wireless communication network, information may be transmitted in various multiple access schemes, such as CDMA, frequency division multiple access (FDMA), time division multiple access (TDMA), orthogonal frequency division multiple access (OFDMA), single carrier frequency division multiple access (SC-FDMA), OFDM-FDMA, OFDM-TDMA, OFDM-CDMA, etc.

The terrestrial cell 120 may generally refer to a fixed station that communicates with the LTE 110 and/or other cells, and exchange data and control information by communicating with the LTE 110 and/or other cells.

Although it is shown in FIG. 1 that the terrestrial cell 120 is a next generation Node B (gNB), the term terrestrial cell may be interpreted with a comprehensive meaning indicating a region or function covered by a Node B, an evolved-Node B (eNB), a sector, a site, a base station controller (BSC), a base transceiver system (BTS), an access point (AP), a relay node, a remote radio head (RRH), a radio unit (RU), etc.

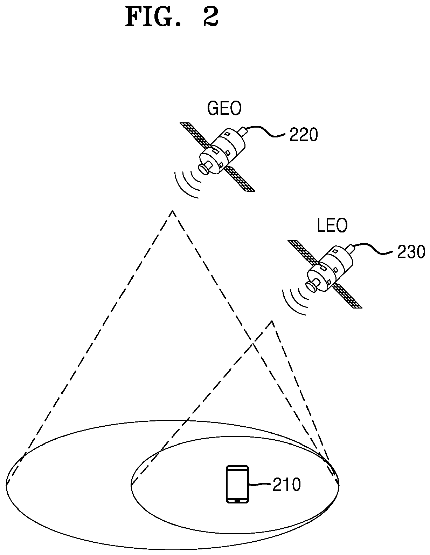

The LEO cell 130 is a type of a non-terrestrial network (NTN) platform, and may differ from a geostationary earth orbit (GEO) cell (e.g., 220 in FIG. 2). Herein, an NTN platform may refer to a mobile communication network using an artificial satellite, unlike the terrestrial cell 120. The LEO cell 130 may refer to an artificial satellite orbiting around the Earth at an altitude of 300 km to 1500 km above the ground. The GEO cell orbits around the Earth in a geostationary orbit (e.g. at an altitude of 35,786 km above the ground), and thus may refer to an artificial satellite observed as stationary by the LTE 110 on the ground.

The LEO cell 130 may orbit around the Earth at a relatively high speed of up to 7.56 km/s. Therefore, the LEO cell 130 may be more influenced by Doppler shift than would the terrestrial cell 120. Herein, the Doppler shift (or Doppler effect) may be understood as an effect in which the frequency of a signal transmitted/received between the UE 110 and a cell changes when the UE 110 or the cell moves relative to the other (i.e. based on the relative velocity between the UE 110 and cell). For example, when the distance between the LTE 110 and the cell decreases (when the UE 110 and cell are moving towards each other), the frequency of the signal transmitted/received between the UE 110 and the cell may increase. On the other hand, when the distance between the UE 110 and the cell increases (when the UE 110 and cell are moving away from each other), the frequency of the signal transmitted and received between the UE 110 and the cell may decrease.

For wireless communication between the terrestrial and LEO cells 120 and 130 and the UE 110, frequency and time synchronization between the terrestrial and LEO cells 120 and 130 and the UE 110 may be required. When the influence of the Doppler shift increases, frequency and time synchronization between the terrestrial and LEO cells 120 and 130 and the UE 110 may be difficult. That is, compared to the terrestrial cell 120, frequency and time synchronization between LEO cell 130 and the UE 110 may be difficult due to the influence of Doppler shift.

Meanwhile, the terrestrial and LEO cells 120 and 130 may be connected to the UE 110 through a wireless channel, and may provide various communication services to the UE 110 through the connected wireless channel. In addition, all user traffic of the terrestrial and LEO cells 120 and 130 may be serviced through a shared channel. Also, the terrestrial and LEO cells 120 and 130 may perform scheduling by collecting state information such as a buffer state of the UE 110, an available transmission power state, a channel state, etc.

The UE 110 is a user device, which may be fixed or mobile, and may refer to any device capable of transmitting and receiving data and/or control information by communicating with the terrestrial cell 120 and the LEO cell 130.

For example, the UE 110 may be referred to as a wireless station (STA), a mobile station (MS), a mobile user equipment (MT), a user terminal (UT), UE, a subscriber station (SS), a wireless device, a handheld device, etc.

As such, the wireless communication system according to an embodiment may include an artificial satellite, such as the LEO cell 130 as well as the terrestrial cell 120. As described above, because the LEO cell 130 may be more influenced by the Doppler shift than the terrestrial cell 120, the influence of the Doppler shift may be considered when determining whether to perform handover of the LTE 110.

FIG. 2 is a diagram illustrating an environment of a GEO cell and a LEO cell according to an embodiment.

In FIG. 2, redundant descriptions with those of FIG. 1 may be omitted. Referring to FIG. 2, UE 210 may access the network of a wireless communication system by transmitting and receiving signals with a GEO cell 220 or a LEO cell 230.

As one of the criteria for determining the handover of the UE 210, RSRP may be used. In the inventive concept, RSRP may mean a value obtained by the UE 210 measuring the power of a reference signal received from a cell. The higher the RSRP, the greater the strength of the reference signal, and thus, RSRP may be used to determine whether to perform handover of the LTE 210.

Because the GEO cell 220 orbits around the Earth according to the Earth's speed of rotation, the GEO cell 220 may look like a fixed point with respect to the UE 210. Therefore, because the influence of the Doppler shift of the GEO cell 220 is insignificant, the GEO cell 220 may determine the handover of the UE 210 using RSRP.

However, the LEO cell 230 may orbit around the Earth at a speed different from the Earth's speed of rotation, and a signal transmitted/received between the LEO cell 230 and the UE 210 may be greatly influenced by the Doppler shift.

When the GEO cell 220 is compared to the LEO cell 230 based only on the RSRP, because the LEO cell 230 may be closer to the UE 210, the RSRP thereof may be greater than that of the GEO cell 220. However, because the speed of the LEO cell 230 relative to the UE 210 is greater than that of the GEO cell 220, the LEO cell 230 may be more influenced by the Doppler shift than the GEO cell 220. Accordingly, when handover is performed from the GEO cell 220 to the LEO cell 230 without considering the impact of Doppler shift, the receive performance of the UE 210 may deteriorate.

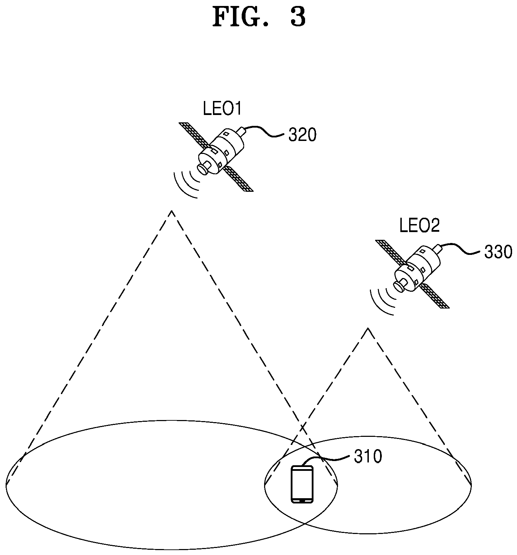

FIG. 3 is a diagram illustrating LEO cell environments of different altitudes according to an embodiment.

In FIG. 3, redundant descriptions with those of FIGS. 1 and 2 may be omitted. Referring to FIG. 3, UE 310 may access the network of a wireless communication system by transmitting and receiving signals with a first LEO cell 320 or a second LEO cell 330 having different altitudes.

Because the second LEO cell 330 may orbit at a lower altitude than the first LEO cell 320, an RSRP value of the second LEO cell 330 measured by the LTE 310 may be greater than that of the first LEO cell 320. However, because the speed of the second LEO cell 330 relative to the LTE 310 may be greater than that of the first LEO cell 320, the second LEO cell 330 may be more influenced by the Doppler shift than the first LEO cell 320. That is, when handover is performed from the first LEO cell 320 to the second LEO cell 330 with respect to only the RSRP, the receive performance of the LTE 310 may deteriorate.

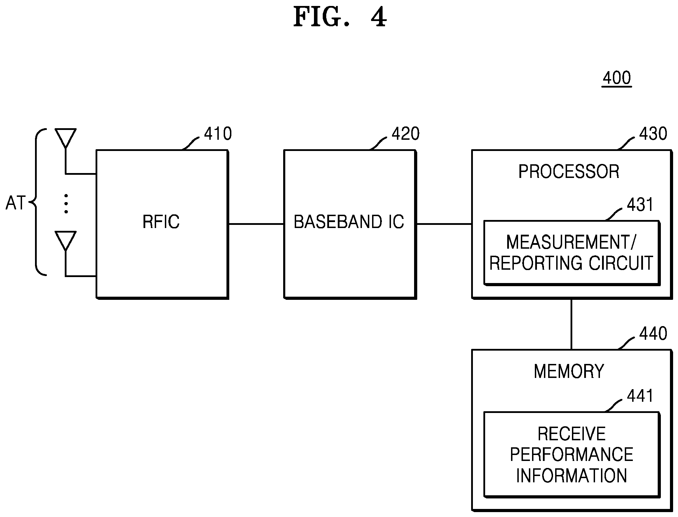

FIG. 4 is a block diagram illustrating a LTE according to an embodiment.

Referring to FIG. 4, UE 400 may include a plurality of antennas AT, a radio frequency (RF) integrated circuit (IC) 410, a baseband IC 420, a processor 430, and a memory 440. Note that the implementation example of the LTE 400 illustrated in FIG. 4 may be modified to include more or fewer components in other embodiments.

The RFIC 410 may perform a function of transmitting and receiving a signal using the plurality of antennas AT through a wireless channel such as band conversion and amplification of the signal. Specifically, the RFIC 410 may up-convert a baseband signal provided from the baseband IC 420 into an RF band signal, and then transmit the RF band signal through the antennas AT, and down-convert the RF band signal received through the antennas AT into a baseband signal. For example, the RFIC 410 may include a transmit filter, a receive filter, an amplifier, a mixer, an oscillator, a digital to analog converter (DAC), an analog to digital converter (ADC), etc. In addition, the RFIC 410 may further include a plurality of RF chains (not shown), and may perform beamforming using the antennas AT. The RFIC 410 may adjust the phase and magnitude of each of signals transmitted and received through the antennas AT for beamforming. Furthermore, the RFIC 410 may perform multi input multi output (MIMO), and may receive multiple layers when performing a MIMO operation.

The baseband IC 420 may perform a conversion operation between the baseband signal and a bit stream according to the physical layer standard of the system. For example, the baseband IC 420 may generate complex symbols by encoding and modulating a transmission bit stream during data transmission. In addition, the baseband IC 420 may reconstruct the received bit stream by demodulating and decoding the baseband signal provided from the RFIC 410 during data reception.

The RFIC 410 and the baseband IC 420 may transmit and receive signals as described above. Each of the RFIC 410 and the baseband IC 420 may be referred to as a transmitter, a receiver, a transceiver, or a communicator. Furthermore, at least one of the RFIC 410 and the baseband IC 420 may include a plurality of communication modules supporting a plurality of different wireless access technologies. In addition, at least one of the RFIC 410 and the baseband IC 420 may include different communication modules to process signals of different frequency bands. For example, different wireless access technologies may include new radio (NR) technology, LTE technology, etc. Also, different frequency bands may include a super high frequency band (e.g. 3-30 GHz), a millimeter wave band (e.g. 30-300 GHz), etc. The UE 400 may communicate with a cell using the RFIC 410 and the baseband IC 420.

The processor 430 may control overall operations of the UE 400. In an embodiment, the processor 430 may include a measurement/reporting circuit 431. To perform handover and/or for use in other communication operations, the UE 400 may transmit user capability information (interchangeably, "user capability") including receive performance information 441 to a serving cell. The UE 400 may measure RSRP and a Doppler shift (interchangeably, "Doppler_shift") of a reference signal with reference to radio resource control (RRC) configuration information received from the serving cell. In addition, the UE 400 may receive a "Doppler parameter" from the serving cell. The Doppler parameter may be used, in conjunction with the measured RSRP and Doppler shift, to calculate an RSRP Doppler value ("RSRP_Doppler value" (interchangeably, just "RSRP_Doppler")), according to the RRC configuration information. The RSRP_Doppler value is a signal metric that is reported to the serving cell, where it is used to determine whether handover should occur. The RSRP_Doppler value may be a metric that quantifies received signal quality based on both RSRP and Doppler shift. By reporting RSRP_Doppler to the serving cell, the UE 400 may reduce feedback overhead compared to the case of separately reporting the RSRP and the Doppler shift.

In some embodiments, the RRC configuration information may be configured according to the standard defined in NR 3GPP TS 38.331. For example, the RRC configuration information for measuring RSRP and the Doppler shift of the reference signal may be set as shown in Table 1 below. Referring to ReportConfigNR of Table 1 indicating the type of report, a parameter rsrp-doppler may be reported periodically or aperiodically. However, contrary to embodiments of the present disclosure, this parameter may not depend on the user capability and/or the Doppler parameter. In embodiments of the present disclosure, rsrp-doppler may be replaced with RSRP_Doppler. Further, in embodiments herein, MeasReportQuantity, indicating the measurement amount to be reported, may include RSRP_Doppler. Moreover, in embodiments herein, NR-RS-Type, indicating the type of the reference signal to be measured, may include a synchronization signal block (SSB), a channel state information-reference signal (CSI-RS), also a tracking reference signal (TRS) and/or a physical downlink shared channel-demodulate reference signal (PDSCH-DMRS) having a relatively short period.

[Table 1]

```
ReportConfigNR ::=                      SEQUENCE {
    reportType                              CHOICE {
        periodical                              PeriodicalReportConfig,
        eventTriggered                          EventTriggerConfig,
        aperidodical                            AperiodicalReportConfig,
        ...,
    }
}
MeasReportQuantity ::=                   SEQUENCE {
    rsrp                                        BOOLEAN,
    rsrq                                        BOOLEAN,
    sinr                                        BOOLEAN,
    rsrp-doppler                                BOOLEAN
}
NR-RS-Type ::=          ENUMERATED {ssb, csi-rs, trs, pdsch-dmrs}
```

Table 2 indicates RRC configuration for generating a measurement event. In particular, Table 2 may indicate the RRC configuration for generating the measurement event when the type of report of Table 1 is eventTriggered. In embodiments herein, rsrp-doppler may be replaced with RSRP_Doppler in Table 2.

[Table 2]

```
ThresholdNR ::=                      SEQUENCE{
    thresholdRSRP                       RSRP-Range
OPTIONAL,    -- Need R
    thresholdRSRQ                       RSRQ-Range
OPTIONAL,    -- Need R
    thresholdSINR                       SINR-Range
OPTIONAL,     -- Need R
    thresholRSRP-Doppler               RSRP-Doppler-Range
OPTIONAL    -- Need R
}

MeasTriggerQuantity ::=                   CHOICE {
    rsrp                                    RSRP-Range,
    rsrq                                    RSRQ-Range,
    sinr                                    SINR-Range,
    rsrp-doppler                            RSRP-Doppler-Range
}

MeasTriggerQuantityOffset ::=             CHOICE {
    rsrp                                    INTEGER (-30..30),
    rsrq                                    INTEGER (-30..30),
    sinr                                    INTEGER (-30..30),
    rsrp-doppler                            INTEGER (-30..30)
}
```

Table 3 may indicate RRC configuration for the LTE 400 to measure and report Level 3 (L3) values, according to the present embodiments. Level 3 (or layer 3) may represent a network layer (e.g. of a 5G network). Level 3 might be an RRC layer. Level 3 may be in contrast to Level/Layer 1 (e.g. a physical layer) or Level/Layer 2 (e.g. a medium access control layer). More specifically, Filterconfig, which means a filtering coefficient for L3 measurement, may include filterCoefficientRSRP_Doppler.

[Table 3]

```
FilterConfig ::=                    SEQUENCE {
    filterCoefficientRSRP               FilterCoefficient
DEFAULT fc4,
    filterCoefficientRSRQ               FilterCoefficient
DEFAULT fc4,
    filterCoefficientRS-SINR            FilterCoefficient
DEFAULT fc4,
    filterCoefficientRSRP-Doppler       FilterCoefficient
DEFAULT fc4
}
```

Table 4 may indicate RRC configuration for the LTE 400 to measure and report Level 1 (L1) values. When cri-RSRP-Doppler and ssb-Index-RSRP-Doppler are set to 1, the UE 400 may report RSRP_Doppler to the serving cell using channel state information (CSI) in the present embodiments.

[Table 4]

```
reportQuantity                          CHOICE {
        none                                NULL,
        cri-RI-PMI-CQI                      NULL,
        cri-RI-i1                           NULL,
        cri-RI-i1-CQI                       SEQUENCE {
            pdsch-BundleSizeForCSI              ENUMERATED {n2, n4}
OPTIONAL    -- Need S
        },
        cri-RI-CQI                          NULL,
        cri-RSRP                            NULL,
        ssb-Index-RSRP                      NULL,
        cri-RI-LI-PMI-CQI                   NULL,
        cri-RSRP-Doppler                            NULL,
        ssb-Index-RSRP-Doppler                      NULL
    },
```

Table 5 may list RRC configurations indicating a measurement value reported by the UE 400. The measurement value reported by the LTE 400 may include RSRP_Doppler in accordance with the present embodiments. (RSRP_Doppler may replace rsrp-doppler in the present embodiments.

[Table 5]

```
MeasQuantityResults ::=                 SEQUENCE {
    rsrp                                    RSRP-Range
OPTIONAL,
    rsrq                                    RSRQ-Range
OPTIONAL,
    sinr                                    SINR-Range
OPTIONAL,
    rsrp-doppler                            RSRP-Doppler-Range
OPTIONAL
}
```

The Doppler parameter may be defined as a parameter used to calculate RSRP_Doppler. As noted earlier, RSRP_Doppler is a value considering both RSRP and the Doppler shift.

In some embodiments, the Doppler parameter may refer to a shift coefficient $\alpha$, where $\alpha$ is a real number greater than zero. In this regard, RSRP_Doppler may be calculated as in Equation 1 below. As shown in Equation 1, RSRP_Doppler may have a value that changes according to the value of the Doppler shift (Doppler_Shift) measured by the LTE 400. The Doppler shift (Doppler_shift) may be a difference between the frequency of the reference signal as transmitted by the transmitter (e.g. by the serving cell) and the frequency of the reference signal as received by the receiver (e.g. by the LTE 400). The receiver (e.g. the LTE 400) may calculate the Doppler shift as the reference signal may be transmitted with a predefined transmission frequency. That is, the receiver may know the predefined transmission frequency. Alternatively, the transmission frequency of the reference signal may be communicated to the receiver by the transmitter.

<Equation 1>

$$RSRP\_Doppler = RSRP - \alpha * Doppler\_shift.$$

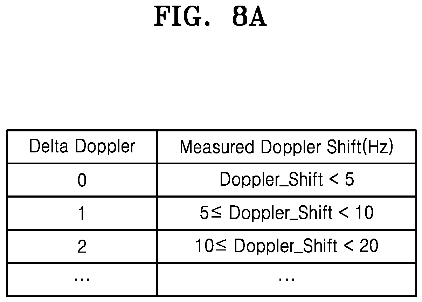

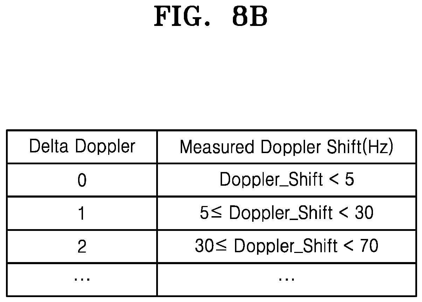

In another embodiment, the Doppler parameter is a parameter referred to herein as "Delta_Doppler" (or "Delta Doppler"), which may be one of a plurality of values corresponding to different respective ranges of the Doppler shift. To this end, RSRP_Doppler may be calculated as in Equation 2 below. As shown in Equation 2 and FIGS. 8A and 8B, RSRP_Doppler and Delta_Doppler may each have a value that changes according to the range of the Doppler shift measured by the LTE 400.

<Equation 2>

$$RSRP\_Doppler = RSRP - Delta\_Doppler.$$

The memory 440 may store data such as a basic program, an application program, and setting information for the operation of the UE 400. Also, the memory 440 may store a program executed when the processor 430 performs an operation related to measurement and reporting according to an embodiment in the form of code. In an embodiment, the memory 440 may store the receive performance information 441 of the LTE 400 used to determine a Doppler parameter value.

The receive performance information 441 of the UE 400 may indicate the capability of the LTE 400 to perform frequency and time synchronization with the serving cell. For example, the receive performance information 441 of the UE 400 may indicate receive performance capability of a first level or a second, higher level. A LTE having the receive performance information 441 of the second level may mean UE having better frequency and time synchronization capability compared to a LTE having the receive performance information 441 of the first level. Additional levels may be defined and applied.

The UE 400 may provide the receive performance information 441 to the serving cell. The serving cell may set the Doppler parameter value based on the receive performance information 441. For example, when the receive performance information 441 of the LTE 400 indicates the receive performance of the second level, the Doppler parameter may be set to a low value. On the other hand, when the receive performance information 441 of the LTE 400 indicates the receive performance of the first level, the Doppler parameter may be set to a higher value.

Referring to Equation 1 above, the shift coefficient $\alpha$ when the receive performance information 441 of the LTE 400 is the second level may be set smaller than the shift coefficient $\alpha$ when the receive performance information 441 of the LTE 400 is the first level. The smaller the shift coefficient $\alpha$, the greater the influence of RSRP on RSRP_Doppler, and the smaller the influence of the Doppler shift on RSRP_Doppler.That is, when the receive performance information 441 of the LTE 400 is the second level, the frequency and time synchronization capability of the LTE 400 is high, and thus, in RSRP_Doppler, the influence of the Doppler shift may be considered less and the influence of RSRP may be considered more. Equation 1 has been described as an example, but also in the case of Equation 2, when the receive performance information 441 of the LTE 400 is the second level, Delta Doppler may be set smaller than when the receive performance information 441 of the LTE 400 is the first level.

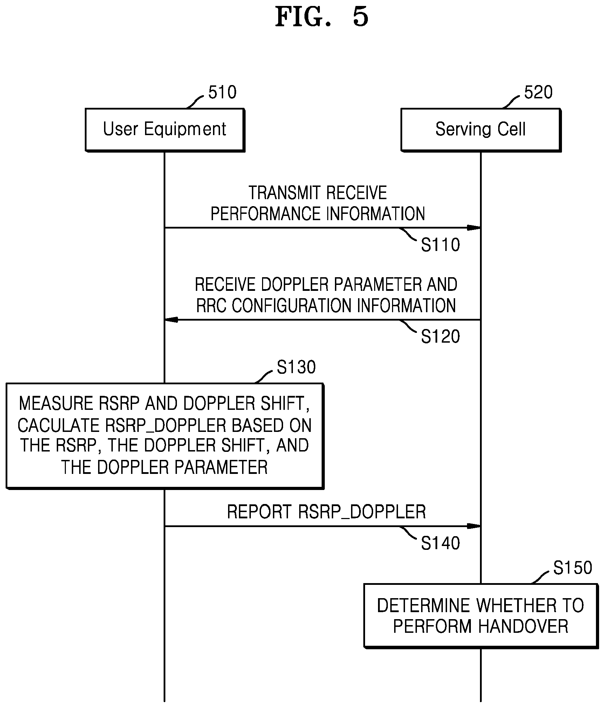

FIG. 5 is a signal exchange diagram between a LTE and a serving cell according to an embodiment. FIG. 5 may be described with reference to FIGS. 1 to 4 described above.

In operation S110, LTE 510 may transmit receive performance information of the LTE 510 to a serving cell 520. To this end, the LTE 510 may transmit user capability including the receive performance information to the serving cell 520.

In operation S120, the LTE 510 may receive a Doppler parameter and RRC configuration information, from the serving cell 520. Here, the Doppler parameter may have a value generated based on the receive performance information of UE or user capability including the receive performance information. In some embodiments, the Doppler parameter is provided to LTE as the shift coefficient $\alpha$, as shown in Equation 1. In another embodiment, the Doppler parameter is provided to the LTE 510 as Delta Doppler, e.g., in the form of a table corresponding to Equation 2 and as shown in FIGS. 8A and 8B. In this case, the Doppler parameter may define a Delta Doppler for each of a plurality of ranges of Doppler shifts (e.g. in the form of a mapping table). This can allow the UE to calculate the Delta Doppler based on the measured Doppler shift.

In operation S130, the LTE 510 may measure RSRP and Doppler shift of a reference signal with reference to the RRC configuration information received from the serving cell 520. Further, the UE 510 may calculate RSRP_Doppler based on the measured RSRP, the measured Doppler shift, and the Doppler parameter $\alpha$ or Delta Doppler based on Eqn. (1) or (2).

In operation S140, the LTE 510 may report RSRP_Doppler calculated in operation S130 to the serving cell 520. In some embodiments, the LTE 510 may report RSRP_Doppler as an L1 value using CSI. In another embodiment, the LTE 510 may report RSRP_Doppler as an L3 value using an RRC measurement report.

In operation S150, the serving cell 520 may determine whether to perform handover of the LTE 510 considering RSRP_Doppler received from the LTE 510. For instance, if RSRP_Doppler with respect to the serving cell is below a first predetermined threshold, and RSRP_Doppler with respect to a neighbor cell is above a second predetermined threshold, a handover process may be initiated. When the handover process is initiated, both the serving cell 520 and the LTE 510 may cooperate to perform conventional handover operations with respect to a target cell.

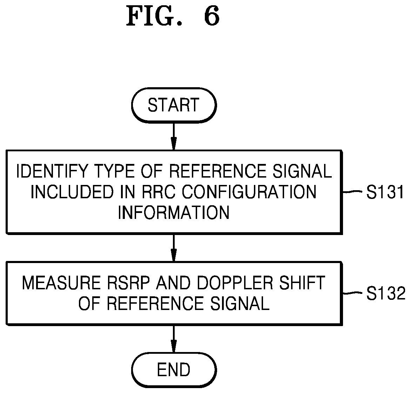

FIG. 6 is a flowchart illustrating RSRP and a Doppler shift measurement operation according to an embodiment. The operations of FIG. 6 may be an example of a portion of operation S130 of FIG. 5.

In operation S131, the LTE 510 may identify the type of a reference signal included in RRC configuration information. In some embodiments, the reference signal may be SSB, CSI-RS, TRS, etc.

In another embodiment, the reference signal may be a signal having a shorter period than that of SSB or CSI-RS such as TRS, PDSCH, DMRS, etc. When the serving cell 520 is an LEO cell, because the Doppler shift of a signal transmitted/received between the LTE 510 and the serving cell 520 is large, measuring a reference signal having a short period may improve measurement accuracy.

In operation S132, the LTE 510 may measure the RSRP and Doppler shift of the reference signal. For example, when the reference signal included in the RRC configuration information is TRS, the LTE 510 may measure RSRP and Doppler shift of the TRS.

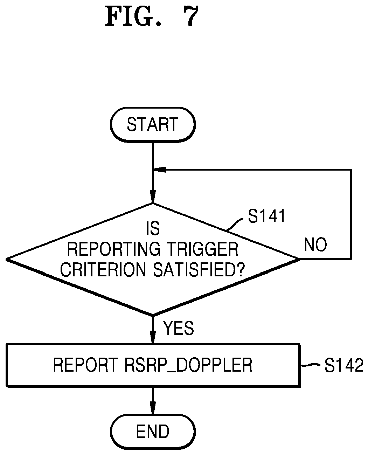

FIG. 7 is a flowchart illustrating an RSRP_Doppler reporting operation according to an embodiment. The operations of FIG. 7 may correspond to an embodiment of operation S140 of FIG. 5.

In operation S141, the LTE 510 may determine whether a reporting trigger criterion is satisfied. Herein, the reporting trigger criterion may mean a specific condition causing the LTE 510 to report RSRP_Doppler to the serving cell 520. For example, when RSRP_Doppler calculated in operation S130 of FIG. 5 (with respect to a neighbor cell) is equal to or greater than a predetermined threshold value, the reporting trigger criterion may be satisfied. When the reporting trigger criterion is satisfied, the UE 510 may perform operation S142. On the other hand, when the reporting trigger criterion is not satisfied, the LTE 510 may repeatedly perform operation S141.

In operation S142, the LTE 510 may report RSRP_Doppler to the serving cell 520. In some embodiments, operation S142 may be an L1 reporting operation using CSI. In another embodiment, operation S142 may be an L3 reporting operation using an RRC measurement report.

FIGS. 8A and 8B are tables illustrating examples of Delta Doppler according to Doppler shift.

FIGS. 8A and 8B may represent relationships between the Doppler shift and Delta Doppler of Equation 2 described above. FIG. 8A may correspond to a case where receive performance information of LTE is a first level, and FIG. 8B may correspond to a case where the receive performance information of the LTE is a second level. For example, predetermined ranges of the Doppler shift correspond to different respective values of Delta Doppler, where the ranges may differ for different levels of receive performance. For instance, when the Doppler shift measured by the LTE is 15 Hz (in the range of 10 to 20 Hz), the LTE of the first level may set a Delta Doppler value to 2. On the other hand, the LTE of the second level may set the Delta Doppler value to 1 when the Doppler shift measured by the LTE is 15 Hz. Referring to Equation 2 described above, the UE of the first level having lower receive performance than that of the LTE of the second level may set a larger Delta Doppler value to more heavily weigh the influence of the Doppler shift.

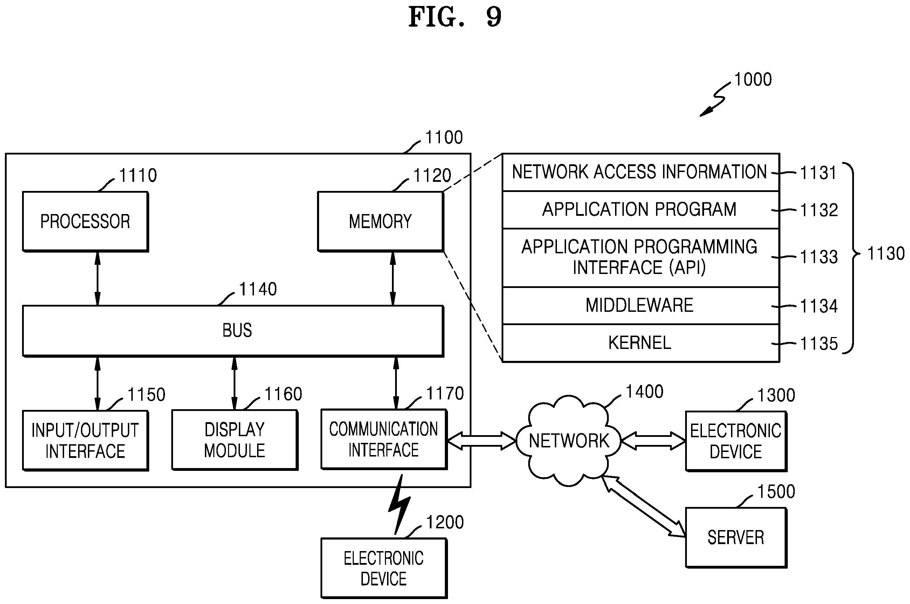

FIG. 9 is a block diagram illustrating a wireless communication system according to an embodiment.

For example, a wireless communication device 1100 of FIG. 9 may be applied to the LTE (e.g., 110 of FIG. 1) implemented according to some embodiments. Furthermore, in some embodiments, the wireless communication device 1100 of FIG. 9 may operate in a standalone (SA) mode or a non-standalone (NSA) mode.

As an example, the wireless communication device 1100 implemented in a network environment 1000 is illustrated in FIG. 9.

The wireless communication device 1100 may include a bus 1140, a processor 1110, a memory 1120, an input/output interface 1150, a display module 1160, and a communication interface 1170. The wireless communication device 1100 may omit at least one of the components or additionally include at least one other component. However, for convenience of description, in an embodiment, the wireless communication device 1100 including the components will be described as an example.

The bus 1140 may connect the processor 1110, the memory 1120, the input/output interface 1150, the display module 1160, and the communication interface 1170 to each other. Accordingly, exchange and transfer of signals (e.g., control messages and/or data) between the processor 1110, the memory 1120, the input/output interface 1150, the display module 1160, and the communication interface 1170 may be performed via the bus 1140.

The processor 1110 may include one or more of a central processing unit (CPU), an application processor (AP), or a communication processor (CP). In addition, the processor 1110 may perform, for example, an operation or data processing related to control and/or communication of other components in the wireless communication device 1100. For reference, the processor 1110 may have a configuration including the function of the measurement/reporting circuit 431 of FIG. 4.

The memory 1120 may include a volatile memory and/or a non-volatile memory. In addition, the memory 1120 may store, for example, a command or instruction or data related to other components in the wireless communication device 1100.

Also, the memory 1120 may store software and/or a program 1130. The program 1130 may include, for example, a kernel 1135, middleware 1134, an application programming interface (API) 1133, an application program 1132 (also referred to as "application"), network access information 1131, etc.

For reference, at least some of the kernel 1135, the middleware 1134, and the API 1133 may be referred to as an operating system (OS). In addition, the memory 1120 may be a configuration including the function of the memory 440 of FIG. 4.

The input/output interface 1150 may transmit, for example, a command or instruction or data input from a user or another external device to other components of the wireless communication device 1100. Also, the input/output interface 1150 may output a command or instruction or data received from other components of the wireless communication device 1100 to the user or the other external device.

The display module 1160 may include, for example, a liquid crystal display (LCD), a light emitting diode (LED) display, an organic light emitting diode (OLED) display, a micro electromechanical systems (MEMS) display, or an electronic paper display.

In addition, the display module 1160 may display, for example, various contents (e.g., text, images, video, icons, or symbols) to the user. In addition, the display module 1160 may include a touch screen, and may receive, for example, a touch, a gesture, a proximity touch, or a hovering input by using an electronic pen or a part of the user's body.

The communication interface 1170 may establish communication between the wireless communication device 1100 and an external device (e.g., electronic devices 1200 and 1300 or a server 1500). For example, the communication interface 1170 may be connected to a network 1400 through wireless communication or wired communication to communicate with an external device (e.g., the electronic device 1300 or the server 1500). In addition, the communication interface 1170 may communicate with an external device (e.g., the electronic device 1200) through wireless communication.

In addition, the network 1400 may be a telecommunications network, and may include at least one of, for example, a computer network (e.g., LAN or WAN), the Internet, or a telephone network.

Meanwhile, each of the external electronic devices 1200 and 1300 may be the same type as or a different type from the wireless communication device 1100. In addition, the server 1500 may include a group of one or more servers.

For reference, all or some of the operations executed by the wireless communication device 1100 may be executed by other external devices (e.g., the electronic devices 1200 and 1300 or the server 1500).

In addition, when the wireless communication device 1100 needs to perform a function or service automatically or upon request, the wireless communication device 1100 itself may perform the function or service, or may request some functions or services from external devices (e.g., the electronic devices 1200 and 1300 or the server 1500). In addition, the other external devices (e.g., the electronic devices 1200 and 1300 or the server 1500) may execute a requested function or service and transmit a result of execution to the wireless communication device 1100. In this case, the wireless communication device 1100 may perform the function or the service by processing the received result as it is or additionally.

For such a mechanism, for example, cloud computing, distributed computing, or client-server computing technology may be applied to the wireless communication device 1100.

As described above, in various embodiments of the inventive concept, feedback overhead may be reduced compared to the case of separately reporting RSRP and Doppler shift, by reporting the RSRP_Doppler value to the serving cell. In addition, the network environment may determine whether to perform handover considering RSRP_Doppler, in which both RSRP and Doppler shift are reflected.

While the inventive concept has been particularly shown and described with reference to embodiments thereof, it will be understood that various changes in form and details may be made therein without departing from the scope of the following claims.

**Claims**

1. An operating method of user equipment, UE, the operating method comprising:

   transmitting a user capability comprising receive performance information of the LTE to a serving cell;
   receiving a Doppler parameter generated based on the user capability and radio resource control, RRC, configuration information, from the serving cell;
   measuring reference signal received power, RSRP, of a reference signal and a Doppler shift with reference to the RRC configuration information; and
   reporting, to the serving cell, an RSRP_Doppler value, which is a signal metric calculated based on the measured RSRP, the measured Doppler shift, and the Doppler parameter.

2. The operating method of claim 1, wherein the Doppler parameter includes a shift coefficient $\alpha$, and the RSRP_Doppler value is calculated according to:

$$\text{RSRP\_Doppler} = \text{RSRP} - \alpha * \text{Doppler\_shift},$$

wherein Doppler_shift is the Doppler shift measured by the LTE.

3. The operating method of claim 1, wherein

the Doppler parameter includes a "Delta_Doppler" parameter having one of a plurality of values corresponding to different respective ranges of the Doppler shift, and
the RSRP_Doppler value is calculated according to:

$$RSRP\_Doppler = RSRP - Delta\_Doppler.$$

4. The operating method of any preceding claim, wherein the RRC configuration information includes information about an aperiodic reporting of the RSRP_Doppler value.

5. The operating method of any preceding claim, wherein the reference signal includes at least one of a tracking reference signal or a physical downlink shared channel-demodulate reference signal.

6. The operating method of any preceding claim, wherein

the RRC configuration information includes a channel state information-reference signal, and
the reporting of the RSRP_Doppler value to the serving cell includes reporting the RSRP_Doppler value to the serving cell by using channel state information generated based on the channel state information-reference signal.

7. The operating method of any preceding claim, wherein

the RRC configuration information includes an L3 filtering coefficient, and
the reporting of the RSRP_Doppler value to the serving cell includes reporting the RSRP_Doppler value generated by applying the L3 filtering coefficient to the result of the measurement to the serving cell.

8. The operating method of any preceding claim, wherein the reporting of the RSRP_Doppler occurs when the LTE detects a measurement event.

9. The operating method of claim 8, wherein the measurement event corresponds to the RSRP_Doppler value being equal to or greater than a threshold level.

10. The operating method of any preceding claim, further comprising performing handover to a target cell in cooperation with the serving cell when the RSRP_Doppler value with respect to the serving cell is below a predetermined threshold.

11. User equipment, UE, comprising:

a memory configured to store receive performance information of the LTE; and
a processor configured to:

transmit a user capability comprising receive performance information of the LTE to a serving cell;
receive a Doppler parameter generated based on the user capability and radio resource control, RRC, configuration information, from the serving cell;
measure reference signal received power, RSRP, of a reference signal and a Doppler shift with reference to the RRC configuration information; and
report to the serving cell an RSRP_Doppler value, which is a signal metric calculated based on the measured RSRP, the measured Doppler shift, and the Doppler parameter.

12. The LTE of claim 11, wherein the RRC configuration information includes information about an aperiodic report.

13. The LTE of claim 11 or claim 12, wherein the reference signal includes at least one of a tracking reference signal or a physical downlink shared channel-demodulate reference signal.

14. The LTE of any of claims 11-13, wherein

the RRC configuration information includes a channel state information-reference signal, and
the processor is configured to report the RSRP_Doppler value to the serving cell by using channel state information generated based on the channel state information-reference signal.

15. The LTE of any of claims 11-14, wherein

the RRC configuration information includes an L3 filtering coefficient, and
the processor is configured to report the RSRP_Doppler value generated by applying the L3 filtering coefficient to the result of the measurement to the serving cell.

# FIG. 1

# FIG. 2

GEO

220

LEO

230

210

# FIG. 3

LEO1
320

LEO2
330

310

## FIG. 4

# FIG. 5

510 — User Equipment

520 — Serving Cell

TRANSMIT RECEIVE
PERFORMANCE INFORMATION
S110

RECEIVE DOPPLER PARAMETER AND
RRC CONFIGURATION INFORMATION
S120

S130

MEASURE RSRP AND DOPPLER SHIFT,
CACULATE RSRP_DOPPLER BASED ON
THE RSRP, THE DOPPLER SHIFT, AND
THE DOPPLER PARAMETER

REPORT RSRP_DOPPLER
S140

S150

DETERMINE WHETHER TO
PERFORM HANDOVER

# FIG. 6

```
        ┌─────────┐
        │  START  │
        └────┬────┘
             │
             ▼
┌───────────────────────────────┐
│ IDENTIFY TYPE OF REFERENCE SIGNAL │── S131
│   INCLUDED IN RRC CONFIGURATION   │
│           INFORMATION             │
└───────────────┬───────────────┘
                │
                ▼
┌───────────────────────────────┐
│ MEASURE RSRP AND DOPPLER SHIFT  │── S132
│        OF REFERENCE SIGNAL       │
└───────────────┬───────────────┘
                │
                ▼
        ┌─────────┐
        │   END   │
        └─────────┘
```

# FIG. 7

# FIG. 8A

| Delta Doppler | Measured Doppler Shift(Hz) |
|:---:|:---:|
| 0 | Doppler_Shift < 5 |
| 1 | 5≤ Doppler_Shift < 10 |
| 2 | 10≤ Doppler_Shift < 20 |
| … | … |

# FIG. 8B

| Delta Doppler | Measured Doppler Shift(Hz) |
|:---:|:---:|
| 0 | Doppler_Shift < 5 |
| 1 | 5≤ Doppler_Shift < 30 |
| 2 | 30≤ Doppler_Shift < 70 |
| … | … |

**FIG. 9**

Europäisches
Patentamt

European
Patent Office

Office européen
des brevets

## EUROPEAN SEARCH REPORT

**Application Number**

EP 23 17 2972

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SAMSUNG: "Remaining issues for NTN", 3GPP DRAFT; R1-2111737, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. e-Meeting; 20211111 – 20211119 5 November 2021 (2021-11-05), XP052179516, Retrieved from the Internet: URL:https://ftp.3gpp.org/tsg_ran/WG1_RL1/TSGR1_107-e/Docs/R1-2111737.zip R1-2111737 Remaining issues for NTN Samsung.docx [retrieved on 2021-11-05] * the whole document * | 1-15 | INV. H04W36/00 ADD. H04W84/06 |
| A | WO 2020/237555 A1 (QUALCOMM INC [US]; CAO YIQING [CN] ET AL.) 3 December 2020 (2020-12-03) * paragraph [0027] – paragraph [00104]; figures 1-6 * | 1-15 | |
| A | WO 2022/086378 A1 (ERICSSON TELEFON AB L M [SE]) 28 April 2022 (2022-04-28) * page 9, line 14 – page 41, line 26; figures 1-18 * | 1-15 | TECHNICAL FIELDS SEARCHED (IPC) H04W |
| A | WO 2021/008450 A1 (QUALCOMM INC [US]; HAO CHENXI [CN] ET AL.) 21 January 2021 (2021-01-21) * paragraph [00165] – paragraph [00223]; figures 1-6 * | 1-15 | |

-/--

The present search report has been drawn up for all claims

| Place of search | Date of completion of the search | Examiner |
|---|---|---|
| Munich | 15 September 2023 | Fischer, Erik |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

Europäisches
Patentamt

European
Patent Office

Office européen
des brevets

# EUROPEAN SEARCH REPORT

**Application Number**

**EP 23 17 2972**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | "3rd Generation Partnership Project; Technical Specification Group Radio Access Network; Solutions for NR to support non-terrestrial networks (NTN) (Release 16)", 3GPP STANDARD; TECHNICAL REPORT; 3GPP TR 38.821, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. V0.9.0 18 November 2019 (2019-11-18), pages 1-114, XP051840615, Retrieved from the Internet: URL:ftp://ftp.3gpp.org/Specs/archive/38_series/38.821/38821-090.zip R3-196330_38821-090_V2 revisions.doc [retrieved on 2019-11-18] * page 71, section 7.3.2 Connected mode mobility enhancements – page 78, section 7.3.2.2.3 Mobility Configuration * * page 90, section 8.3 Connected mode mobility – page 94, section 8.3.7 Summary * ----- | 1-15 | |
| A,P | WO 2022/236540 A1 (GUANGDONG OPPO MOBILE TELECOMMUNICATIONS CORP LTD [CN]) 17 November 2022 (2022-11-17) * page 4, line 34 – page 8, line 26; figures 1-4 * ----- | 1-15 | |

TECHNICAL FIELDS
SEARCHED      (IPC)

The present search report has been drawn up for all claims

| Place of search | Date of completion of the search | Examiner |
|---|---|---|
| Munich | 15 September 2023 | Fischer, Erik |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 23 17 2972

This annex lists the patent family members relating to the patent documents cited in the above-mentioned European search report.
The members are as contained in the European Patent Office EDP file on
The European Patent Office is in no way liable for these particulars which are merely given for the purpose of information.

15-09-2023

| Patent document cited in search report | | Publication date | Patent family member(s) | | Publication date |
|---|---|---|---|---|---|
| WO 2020237555 | A1 | 03-12-2020 | CN | 113875182 A | 31-12-2021 |
| | | | EP | 3977662 A1 | 06-04-2022 |
| | | | US | 2022210765 A1 | 30-06-2022 |
| | | | WO | 2020237555 A1 | 03-12-2020 |
| | | | WO | 2020238651 A1 | 03-12-2020 |
| WO 2022086378 | A1 | 28-04-2022 | CA | 3198907 A1 | 28-04-2022 |
| | | | CN | 116324466 A | 23-06-2023 |
| | | | EP | 4229935 A1 | 23-08-2023 |
| | | | WO | 2022086378 A1 | 28-04-2022 |
| WO 2021008450 | A1 | 21-01-2021 | WO | 2021007695 A1 | 21-01-2021 |
| | | | WO | 2021008007 A1 | 21-01-2021 |
| | | | WO | 2021008450 A1 | 21-01-2021 |
| WO 2022236540 | A1 | 17-11-2022 | NONE | | |

EPO FORM P0459

For more details about this annex : see Official Journal of the European Patent Office, No. 12/82